# DEMANDE DE BREVET EUROPEEN

(11) **EP 4 183 753 A1**
(43) Date de publication de la demande: **24.05.2023**
(21) Numéro de dépôt: 22305857.9
(22) Date de dépôt: 13.06.2022
(51) Int. Cl.: C03B 5/03, C03B 5/04, C03B 5/20, C03B 5/235, C03B 5/23, C03B 5/185, C03B 5/193, C03B 18/02

(54) **FOUR HYDRIDE DE FABRICATION DE VERRE À FUSION ÉLECTRIQUE POUR ALIMENTER UNE UNITÉ DE FLOTTAGE**

(30) Priorité: 18.11.2021 EP 21306609
(71) Demandeur: Saint-Gobain Glass France, 92400 Courbevoie (FR)
(72) Inventeur: SAGET, Aurélien, 86170 CISSE (FR); DE DIANOUS, Philippe, 60580 COYE LA FORET (FR); LE VERGE, Arnaud, 75004 PARIS (FR); COMBES, Jean-Marie, 95600 EAUBONNE (FR)
(74) Mandataire: Saint-Gobain Recherche

(57) **Abrégé**

L'invention concerne un four hybride (10) de fabrication de verre pour alimenter une unité de flottage du verre sur un bain de métal fondu, ledit four hybride (10) comportant d'amont en aval :
- une zone (100) de fusion électrique à voute froide (140) comportant des électrodes (110) pour fondre un mélange vitrifiable afin d'obtenir un bain (130) de verre ;
- une zone (200) d'affinage et d'homogénéisation à voute chaude, comportant une première courroie (210) de convection et une deuxième courroie (220) de convection ; et
- une zone (300) de refroidissement du verre formée par un bassin (310) de conditionnement qui, parcourue par ladite deuxième courroie (220) de convection, est reliée à au moins un canal (400) d'écoulement,
caractérisé en ce que le four hybride (10) comporte au moins un corset (160) qui, dit premier corset, comporte une sole (165) et relie la zone (100) de fusion électrique à la zone (200) d'affinage et d'homogénéisation du verre, et en ce que ledit four hybride (10) comporte un dispositif (170) de séparation dit « anti-retour » qui, positionné au niveau dudit premier corset (160), est configuré pour empêcher un retour du verre fondu de la zone (200) d'affinage et d'homogénéisation vers la zone (100) de fusion.

## Description

### Domaine technique de l'invention

L'invention concerne un four hydride de fabrication de verre à fusion électrique pour alimenter une unité de flottage (ou « float » en anglais).

L'invention concerne plus particulièrement un four hydride de fabrication de verre pour alimenter une unité de flottage comportant en outre une zone de fusion électrique à voûte froide pour fondre un mélange vitrifiable qui est reliée, par l'intermédiaire d'un premier corset, à une zone d'affinage et d'homogénéisation à voûte chaude comportant deux courroies de convection du verre afin d'obtenir, en quantité idoine, un verre de haute qualité.

Le four hybride de fabrication de verre selon l'invention est non seulement apte à délivrer un verre de haute qualité présentant moins de 0,1 bulle par litre mais est également apte à délivrer un tel verre avec une tirée d'au moins 400 tonnes par jour afin d'alimenter une unité de flottage du verre sur un bain de métal fondu destinée à fabriquer du verre plat.

### Arrière-plan technique

On connaît de l'état de la technique différents exemples de conception de fours pour la fabrication de verre qui dépendent notamment du produit à fabriquer, c'est-à-dire de la mise en forme finale du verre.

Ainsi, on distingue différentes conceptions de four selon que la production envisagée concerne des fibres de verre, le formage industriel de verre creux ou encore celui de verre plat.

L'un des enjeux industriels dans la conception des fours de verrerie est de pouvoir obtenir un verre dont les exigences, en matière de qualité, dépendent du produit. A cet égard la production de verre plat est comparativement l'une des plus exigeante.

Produit en très grande quantité, le verre plat est utilisé dans de nombreuses applications en raison de son caractère polyvalent, notamment largement utilisé dans les secteurs de l'électronique (écrans plats) ou encore de la construction et de l'automobile dans lesquels ce verre est susceptible d'être transformé suivant une grande variété de technique (bombage, trempe, etc.), constituant ainsi un verre de base pour tout un ensemble de produits verriers.

A proportion des enjeux tant de qualité que de quantité, la présente invention vise tout particulièrement la fabrication de verre pour le formage industriel d'un tel verre plat, lequel verre est conventionnellement obtenu au moyen d'une unité de flottage du verre sur un bain de métal fondu, généralement de l'étain, raison pour laquelle un tel verre plat est encore appelé verre flotté ou « float » selon le terme anglais.

Pour la fabrication de verre plat, il est attendu de pouvoir alimenter l'unité de flottage ou « float » avec un verre de haute qualité, c'est-à-dire un verre renfermant le moins d'infondus et de bulles possibles, soit généralement un verre présentant moins de 0,5 bulle / litre.

En effet, la qualité du verre est notamment, mais non exclusivement, déterminée en fonction du nombre de bulle(s) présente(s) dans le verre qui est exprimé en « bulle par litre ». Ainsi, la qualité d'un verre est considérée comme d'autant plus élevée que le nombre de bulle(s) par litre présente(s) dans le verre est particulièrement bas, voire infime.

Par ailleurs, on rappelle que la présence de bulles (ou de défauts gazeux) dans le verre est inhérente au procédé de fabrication du verre dans le processus d'élaboration duquel on distingue généralement trois étapes ou phases successives : la fusion, l'affinage et l'homogénéisation et le conditionnement thermique du verre.

La présence de bulles dans le verre résulte en effet de l'étape de fusion au cours de laquelle est fondu un mélange vitrifiable, aussi appelé « composition ». Le mélange vitrifiable est constitué de matières premières comportant par exemple un mélange de sable, de calcaire (carbonate de calcium), de carbonate de soude, de dolomie pour la fabrication d'un verre sodocalcique (le verre le plus utilisé pour la fabrication de verre plat), et auxquelles est avantageusement ajouté du calcin (encore appelé groisil) constitué de débris de verre afin notamment de favoriser la fusion.

Le mélange vitrifiable est transformé en une masse liquide dans laquelle se dissolvent même les particules les moins miscibles, c'est-à-dire les plus riches en dioxyde de silicium ou silice (SiO₂) et pauvres en oxyde de sodium (Na₂O).

Le carbonate de sodium (Na₂CO₃) commence à réagir avec les grains de sable à partir de 775°C en dégageant alors des bulles de dioxyde de carbone (CO₂) dans un liquide devenant de plus en plus visqueux à mesure que le carbonate se transforme en silicate. De même, la transformation des grains de calcaire en chaux et la décomposition de la dolomie provoquent également l'émission de dioxyde de carbone (CO₂).

L'étape de fusion est achevée lorsqu'il n'y a plus de particules solides dans le liquide de verre fondu devenu très visqueux mais qui, à ce stade du procédé de fabrication, est alors rempli de bulles d'air et de gaz.

L'étape d'affinage et d'homogénéisation permet alors l'élimination desdites bulles présentes dans le verre fondu. De manière connue, on utilise avantageusement au cours de cette étape des « affinants », c'est-à-dire des substances en faible concentration qui, en se décomposant à la température de fusion du bain, fournissent des gaz qui font gonfler les bulles afin d'en accélérer la montée vers la surface du verre.

L'étape de conditionnement thermique du procédé de fabrication permet ensuite d'abaisser la température du verre dès lors que, au début de l'opération de mise en forme, la viscosité du verre doit généralement être au moins dix fois plus élevée que pendant l'affinage.

Il existe bien évidemment une correspondance entre chacune des étapes de fabrication du verre qui viennent d'être décrite et la structure d'un four destiné à leur mise en œuvre.

Généralement, un tel four pour la fabrication de verre comporte ainsi successivement une zone de fusion dans laquelle a lieu la transformation par fusion du mélange vitrifiable en un bain de verre puis une zone d'affinage et d'homogénéisation pour éliminer les bulles du verre et enfin une zone de conditionnement thermique servant à refroidir le verre de manière à l'amener à la température de formage, bien inférieure aux températures subies par le verre au cours de son élaboration.

On retiendra notamment du processus d'élaboration du verre qui vient d'être rappelé que l'étape de fusion s'accompagne d'émission de dioxyde de carbone (CO₂), soit l'un des principaux gaz à effet de serre impliqué dans le changement climatique.

C'est la raison pour laquelle on cherche notamment à utiliser une part toujours plus importante de calcin afin de réduire ces émissions directes de dioxyde de carbone (CO₂), ainsi que les émissions indirectes de dioxyde de carbone (CO₂) liées aux matières premières du mélange vitrifiable.

En effet, hormis la fabrication d'un verre de haute qualité, ainsi que les défis industriels d'une forte productivité avec un coût de construction et d'exploitation des fours les plus faibles possibles, l'un des autres enjeux majeurs auquel l'industrie du verre doit faire face est actuellement écologique, à savoir la nécessité de trouver des solutions pour réduire l'empreinte carbone (en anglais « CO₂ footprint ») liée au processus d'élaboration du verre.

Pour parvenir à atteindre un objectif de neutralité carbone, une approche globale du processus est privilégiée en cherchant à agir sur les multiples leviers pour réduire tant les émissions directes lors de la fabrication que les émissions indirectes ou encore les émissions en amont et en aval de la chaîne de valeur, par exemple celles liées au transport des matériaux en amont puis du produit en aval.

Dès lors, les multiples leviers comprennent la conception des produits et la composition des matériaux, l'amélioration de l'efficacité énergétique des procédés industriels, l'utilisation d'énergies renouvelables et décarbonées, la collaboration avec les fournisseurs de matières premières et les transporteurs afin de réduire leurs émissions, et enfin, l'exploration des technologies de capture et de séquestration des émissions résiduelles.

Dans les émissions directes, outre celles inhérentes au processus d'élaboration du verre rappelées précédemment, le type d'énergie(s) utilisée(s) tout particulièrement pour l'étape de fusion à haute température (plus de 1500°C) représente la part la plus importante dans l'empreinte carbone du processus d'élaboration du verre puisqu'il s'agit généralement d'une énergie fossile, le plus souvent du gaz naturel, voire des produits pétroliers tels que du fioul.

Par conséquent, la recherche de nouvelles conceptions de four doit non seulement permettre de répondre aux enjeux industriels en lien avec la qualité du verre mais aussi de réduire l'empreinte carbone du processus d'élaboration du verre, tant les émissions directes qu'indirectes de dioxyde de carbone (CO₂), et cela en réduisant notamment l'utilisation d'énergie(s) fossile(s).

La fabrication du verre est réalisée dans des fours qui n'ont eu de cesse d'évoluer depuis les premiers fours à pot (ou creuset) en passant par le four Siemens qui est habituellement considéré comme l'ancêtre des grands fours de verrerie à coulée continue d'aujourd'hui, à l'instar des fours à brûleurs transversaux pouvant produire jusqu'à 1200 tonnes de verre flotté par jour.

Le choix de l'énergie utilisée pour la fusion conduit ainsi à distinguer principalement deux grandes conceptions de four pour la fabrication du verre, respectivement les fours à flammes et les fours électriques.

Selon la première conception, les fours à flammes utilisent généralement des combustibles fossiles, notamment du gaz naturel pour les brûleurs, l'énergie thermique est ainsi transmise au verre par échange thermique entre les flammes et la surface du bain de verre.

Les fours à brûleurs transversaux précités sont un exemple de four selon cette première conception et sont largement exploités pour alimenter en verre fondu une unité de flottage ou « float » destinée à fabriquer du verre plat.

Selon la deuxième conception, les fours électriques sont des fours dans lesquels l'énergie thermique est produite par effet Joule dans la masse du verre en fusion.

En effet, substance isolante à température ambiante, le verre devient électriquement conducteur à haute température de sorte que l'on peut envisager d'utiliser l'effet Joule au sein même des fontes de verre pour les chauffer.

Toutefois, les fours électriques sont par exemple utilisés pour l'élaboration de verres particuliers tels que du verre opale au fluor ou du cristal au plomb ou encore sont communément utilisés pour la fabrication de fibres de verre pour de l'isolation thermique.

En effet, il est communément admis par l'Homme du métier que de tels fours électriques ne sont pas en mesure de permettre d'alimenter, ni en quantité, ni surtout en qualité de verre (pour rappel moins de 0,5 bulle par litre), une unité de flottage du verre sur un bain de métal fondu destinée à la fabrication de verre plat.

Les fours électriques de l'état de la technique connus de la Demanderesse sont tout au plus à même de délivrer une tirée de 200 à 250 tonnes par jour d'un verre qui présente au mieux quelques centaines de bulles par litre, plus généralement quelques milliers, ce qui peut éventuellement convenir pour le formage de verres creux, typiquement des bouteilles, mais nullement pour la fabrication de verre plat et par conséquent l'alimentation d'une unité de flottage.

C'est la raison pour laquelle, les fours à flammes (comme les fours à brûleurs transversaux) demeurent aujourd'hui les seuls fours capables d'alimenter une telle unité de flottage du verre.

Or, les fours à flammes reposent sur l'utilisation d'énergies fossiles essentiellement du gaz naturel pour le combustible de sorte que leur bilan carbone est peu compatible avec les objectifs de réduction des émissions de dioxyde de carbone (CO₂), soit de l'empreinte carbone du processus d'élaboration du verre.

Pour compléter l'exposé des conceptions de four pour la fabrication de verre selon l'état de la technique, on citera une « troisième conception » de four, ayant connue récemment des évolutions pour faire face notamment à l'enjeu écologique de réduction des émissions de dioxyde de carbone (CO₂).

Cette troisième conception de four est basée sur un four à flammes mais utilise cependant un chauffage d'appoint électrique, notamment pour augmenter momentanément la production du four ou encore pour améliorer la qualité du verre.

Par conséquent, de tels fours sont encore appelés « fours à flammes avec un appoint électrique ».

Les fours selon cette troisième conception combinent ainsi plusieurs sources d'énergies, respectivement fossile et électrique, et sont pour cette raison aussi appelés fours « hybrides ».

L'adjonction d'un chauffage électrique en appoint permet d'améliorer la capacité de fusion de fours à flammes laquelle est limitée par le transfert thermique se produisant entre la flamme et la surface du bain de verre.

Néanmoins, le fonctionnement d'un tel four hybride repose toujours principalement sur l'utilisation d'un combustible fossile, typiquement du gaz, de sorte que l'impact finalement obtenu sur l'amélioration de l'empreinte carbone du processus d'élaboration du verre reste limité.

En effet, l'électricité n'est utilisée ici qu'en appoint de sorte que son impact est proportionnel. De surcroît, pour améliorer effectivement l'empreinte carbone, l'électricité utilisée doit encore être une électricité dite « verte », c'est-à-dire une électricité qui est produite à partir de sources d'énergies renouvelables et décarbonées.

Le but de l'invention est notamment de proposer une nouvelle conception de four pour la fabrication de verre capable de délivrer un verre de haute qualité et d'alimenter une unité de flottage du verre destinée à fabriquer du verre plat et cela tout en ayant une consommation d'énergie(s) qui permette d'obtenir une réduction significative des émissions de dioxyde de carbone (CO₂) liées au processus d'élaboration du verre.

### Résumé de l'invention

Dans ce but, l'invention propose un four hybride de fabrication de verre pour alimenter une unité de flottage du verre sur un bain de métal fondu, ledit four hybride comportant d'amont en aval :
- une zone de fusion électrique à voûte froide comportant des électrodes pour fondre un mélange vitrifiable afin d'obtenir un bain de verre ;
- une zone d'affinage et d'homogénéisation à voûte chaude, comportant une première courroie de convection et une deuxième courroie de convection ; et
- une zone de refroidissement du verre formée par un bassin de conditionnement qui, parcourue par ladite deuxième courroie de convection, est reliée à au moins un canal d'écoulement,
caractérisé en ce que le four hybride comporte au moins un corset qui, dit premier corset, comporte une sole et relie la zone de fusion électrique à la zone d'affinage et d'homogénéisation du verre et en ce que ledit four hybride comporte un dispositif de séparation dit « anti-retour » qui, positionné au niveau dudit premier corset, est configuré pour empêcher un retour du verre fondu de la zone d'affinage et d'homogénéisation vers la zone de fusion.

Avantageusement, ledit premier corset du four hybride participe en combinaison avec le dispositif de séparation au contrôle de la température du verre en permettant d'assurer un refroidissement du verre qui s'écoule de la zone de fusion électrique vers la zone d'affinage et d'homogénéisation du verre grâce à quoi un contrôle de la première courroie de convection et de la deuxième courroie de convection est obtenu, au bénéfice final d'une fabrication en quantité voulue d'un verre de haute qualité.

Avantageusement, le four hybride comporte des moyens de refroidissement du verre qui sont aptes à refroidir sélectivement le verre dans le premier corset. De préférence, le four hybride comporte un dispositif de refroidissement par circulation d'air.

Avantageusement, les moyens de refroidissement du verre sont aptes à assurer un refroidissement variable, c'est à dire réglable, notamment déterminé en fonction de la température du verre.

Le four hybride selon l'invention permet de conjuguer d'une part une fonte du mélange vitrifiable performante dans la zone de fusion et, d'autre part, une maîtrise de la température du verre introduit dans la zone d'affinage et d'homogénéisation, en particulier pour y obtenir un écoulement du verre respectivement avec une première courroie de convection et une deuxième courroie de convection grâce auxquelles un verre de haute qualité est notamment obtenu.

En effet, le dispositif de séparation limite la quantité de verre fondu s'écoulant vers l'aval depuis la zone de fusion, favorisant ainsi un refroidissement du verre dans le premier corset et raison pour laquelle il existe une synergie entre le dispositif de séparation et le premier corset.

Par ailleurs, le dispositif de séparation empêche également un retour du verre dans le premier corset, depuis la zone d'affinage et d'homogénéisation vers la zone de fusion, grâce à quoi le verre fondu est susceptible d'être refroidi dans le premier corset et ensuite être affiné dans la zone d'affinage et d'homogénéisation comportant une première courroie de convection et une deuxième courroie de convection.

Avantageusement, le dispositif de séparation assurant la fonction d'anti-retour du verre vers la zone de fusion électrique comporte un barrage et/ou au moins une élévation de la sole du premier corset selon les modes de réalisation.

Selon l'invention, la conception générale du four hybride avec une zone de fusion électrique et une zone d'affinage à deux courroies de convection ainsi que le premier corset les reliant et le dispositif de séparation permettent ensemble, autrement dit en combinaison, d'obtenir non seulement un verre de haute qualité, c'est-à-dire présentant moins de 0,1 bulle par litre, mais encore de délivrer une quantité de ce verre avec une tirée qui soit supérieure ou égale à 400 tonnes par jour afin notamment de pouvoir alimenter une unité de flottage.

Ainsi, le four hybride selon l'invention est apte à alimenter en verre une zone de formage constituée par une unité de flottage du verre sur un bain de métal fondu destinée à la fabrication de verre plat.

Avantageusement et à l'encontre des préjugés de l'Homme du métier, le four hybride selon l'invention permet par conséquent de conjuguer haute qualité de verre et grande quantité et cela avec une zone de fusion électrique à voûte froide (et non plus une zone de fusion à flammes).

Dans la présente invention, l'électricité représente ainsi plus de 60%, voire 80% et même plus, de l'énergie totale utilisée dans le four hybride pour le processus d'élaboration du verre.

Le four selon l'invention est dit « hybride » par analogie avec la troisième conception de four décrite précédemment, le terme « hybride » est ainsi employé pour le qualifier en raison de l'utilisation de deux sources d'énergie différentes, respectivement de l'énergie électrique et de l'énergie combustible.

Cependant, l'analogie avec la présente invention ne va pas au-delà dès lors que l'énergie électrique est lors de la fabrication du verre l'unique source d'énergie utilisée pour obtenir la fusion du verre et que l'énergie combustible, de type fossile ou équivalente, n'est par conséquent utilisée dans le four que pour l'affinage et l'homogénéisation du verre.

Avantageusement, le four hybride selon l'invention associe d'une part une zone de fusion électrique à voûte froide et, d'autre part, une zone d'affinage et d'homogénéisation du verre à flammes, c'est-à-dire par combustion, comportant préférentiellement un appoint électrique, lesdites zone de fusion et zone d'affinage étant séparées par le dispositif de séparation dit « anti-retour » du verre vers la zone de fusion.

Grâce à une telle combinaison et notamment au dispositif de séparation et de contrôle de la température du verre entrant dans la zone d'affinage et d'homogénéisation, le four hybride selon l'invention permet d'obtenir un verre de haute qualité, c'est-à-dire comportant moins de 0,1 bulle par litre, tout en étant apte à le délivrer en grande quantité de sorte que ce verre est avantageusement susceptible d'alimenter une unité de flottage du verre ou « float » destinée à la fabrication de verre plat.

La présente invention va donc à l'encontre des préjugés de l'Homme du métier pour lequel un four de fusion électrique ne peut en outre permettre d'obtenir un tel verre de haute qualité et dans une telle quantité.

Dans la présente invention, un verre de haute qualité est notamment obtenu grâce à l'étape d'affinage et d'homogénéisation qui est mise en œuvre après l'étape de fusion électrique, ladite étape étant avantageusement contrôlée grâce au refroidissement du verre que permet le premier corset lequel refroidissement participe à l'obtention des deux courroies de convection, au contrôle de la conduite du verre.

Avantageusement, le verre de haute qualité est aussi obtenu grâce au dispositif de séparation qui, agencé dans le premier corset du four hybride, est configuré pour qu'il n'y ait pas de retour du verre fondu de la zone d'affinage et d'homogénéisation vers la zone de fusion.

Grâce au dispositif de séparation, l'écoulement du verre dans le premier corset est un écoulement de type « piston ».

Avantageusement, le dispositif de séparation est formé par un barrage et/ou une élévation de la sole du premier corset qui sont aptes, respectivement seul ou conjointement, à empêcher un retour du verre fondu de la zone d'affinage et d'homogénéisation vers la zone de fusion électrique du four hybride selon l'invention.

Dans un four hybride selon l'invention, grâce audit dispositif de séparation, aucune courroie de convection ou boucle de recirculation du verre ne s'étend en effet depuis la zone d'affinage et d'homogénéisation vers la zone de fusion.

Par comparaison, une gorge immergée reliant une zone de fusion à une zone d'affinage n'est pas à même d'assurer une telle fonction d'anti-retour du verre dans un four. En effet, un courant de retour du verre existe dans une telle gorge, notamment en raison de l'usure des matériaux.

De plus, le verre s'écoulant dans une gorge n'est pas en contact avec l'atmosphère de sorte qu'il n'est en outre pas susceptible d'être refroidi de manière contrôlée et variable en surface, en particulier par un dispositif de refroidissement par circulation d'air.

Par comparaison à une gorge dont la section est limitée par construction, le premier corset permet de surcroît un écoulement du verre avec une tirée qui correspond à l'alimentation d'une unité de flottage.

Selon l'invention, l'étape d'affinage et d'homogénéisation du verre s'effectue sur du verre ne renfermant avantageusement que pas ou peu d'infondus grâce notamment au dispositif de séparation dit « anti-retour » qui permet d'accroître le temps de séjour du verre dans la zone de fusion électrique.

Le four hybride selon la présente invention consiste en une combinaison de caractéristiques et non une juxtaposition dès lors qu'il existe des interactions entre les caractéristiques techniques, une synergie, notamment entre la zone de fusion électrique et la zone d'affinage et d'homogénéisation à deux courroies de convection et cela grâce au premier corset et au dispositif de séparation associé qui sont respectivement aptes à permettre un refroidissement du verre et à empêcher un retour du verre vers la zone de fusion.

Grâce au premier corset et au dispositif de séparation, la température du verre est susceptible d'être contrôlée séparément et précisément dans la zone de fusion électrique d'une part et dans la zone d'affinage et d'homogénéisation d'autre part.

De préférence, la longueur du premier corset est configurée pour obtenir un refroidissement, un abaissement de la température du verre destiné à s'écouler ensuite dans la zone d'affinage et d'homogénéisation.

En effet, le verre fondu obtenu par une fusion électrique présente généralement des températures plus élevées, par comparaison notamment à une fusion à flammes.

A titre d'exemple, la température du verre dans la zone de fusion est d'environ 1450°C quand la température souhaitée pour le verre dans la partie aval du premier corset est plutôt de l'ordre de 1300°C à 1350°C.

Avantageusement, le four hybride comporte des moyens de refroidissement du verre agencés dans le premier corset de manière à refroidir sélectivement le verre, c'est-à-dire de contrôler le refroidissement pour réguler activement la température du verre.

De préférence, les moyens de refroidissement sont formés par au moins un dispositif de refroidissement par circulation d'air, l'air étant introduit dans l'atmosphère du premier corset pour venir au contact de la surface du bain de verre et extrait afin d'évacuer la chaleur (les calories) transmise à l'air par le verre.

En variante, les moyens de refroidissement sont immergés dans le verre s'écoulant de l'amont vers l'aval à travers le premier corset afin d'en permettre le refroidissement.

De tels moyens de refroidissement immergés dans le verre sont par exemple formés par le barrage qui, formant tout ou partie du dispositif de séparation, est refroidi par un circuit de refroidissement à fluide caloporteur, notamment un circuit du type « water jacket » selon les termes anglais usités.

Selon un autre exemple de réalisation, les moyens de refroidissement sont formés par des plots verticaux agencés dans le premier corset et immergés dans le verre qui sont refroidis par un circuit de refroidissement à fluide caloporteur afin d'évacuer la chaleur transmise par le verre.

Selon encore un autre exemple de réalisation, les moyens de refroidissement sont aptes à refroidir la structure du premier corset en contact avec le verre, le refroidissement étant réalisé depuis l'extérieur de la structure du premier corset.

Bien entendu, les moyens de refroidissement associés au premier corset selon les différents exemples qui viennent d'être donnés sont susceptibles d'être mis en œuvre seul ou encore en combinaison.

Avantageusement, les moyens de refroidissement du verre associé au premier corset permettent de contrôler sélectivement la température du verre laquelle température est susceptible de varier, en particulier lorsque la tirée varie, une augmentation de la tirée provoquant en effet une augmentation de la température du verre.

Par comparaison avec de tels moyens de refroidissement du verre associé au premier corset, un tel refroidissement variable du verre ne serait pas possible avec une gorge.

Avantageusement, le four hybride selon l'invention mise sur l'énergie électrique pour la fusion du mélange vitrifiable et fait le pari de la disponibilité croissante d'une électricité « verte » par exemple obtenue à partir d'énergies éolienne, solaire, etc. et non à partir d'énergies fossiles comme le charbon ou le pétrole.

Avantageusement, l'énergie combustible utilisée dans les brûleurs de la zone d'affinage et d'homogénéisation n'est pas une énergie fossile comme le gaz naturel mais une autre énergie combustible équivalente, préférentiellement de l'hydrogène, en variante du bio-méthane.

Le four hybride selon l'invention est par conséquent à même de répondre non seulement à l'enjeu de la haute qualité de verre et de tirée respectivement requises pour alimenter une unité de flottage ou « float » mais également à l'enjeu écologique afin de permettre une réduction de l'empreinte carbone du processus d'élaboration du verre.

Selon d'autres caractéristiques du four selon l'invention :
- le dispositif de séparation comporte un barrage destiné à être en partie immergé dans le bain de verre ;
   -- le dispositif de séparation est uniquement constitué par un barrage apte à empêcher un retour du verre fondu de la zone d'affinage et d'homogénéisation vers la zone de fusion, de préférence ledit barrage est positionné au niveau de l'extrémité amont du premier corset ;
- le dispositif de séparation comporte au moins une élévation de la sole du premier corset ;
   -- le dispositif de séparation est uniquement constitué par une élévation de la sole apte à empêcher un retour du verre fondu de la zone d'affinage et d'homogénéisation vers la zone de fusion ;
   -- le dispositif de séparation assurant la fonction d'anti-retour du verre vers la zone de fusion comporte un barrage et/ou au moins une élévation de la sole ;
   -- le dispositif de séparation assurant la fonction d'anti-retour du verre vers la zone de fusion comporte un barrage qui est associé à ladite au moins une élévation de la sole ;
- ladite au moins une élévation de la sole comporte, de l'amont vers l'aval, au moins un tronçon ascendant, un tronçon sommital et un tronçon descendant ;
- le barrage est agencé dans le premier corset au-dessus du tronçon sommital de l'élévation de la sole ;
- l'un au moins desdits tronçon ascendant et tronçon descendant de ladite au moins une élévation de la sole est incliné par rapport à l'horizontale et/ou comporte un tronçon sommital formant un plateau ;
- ladite au moins une élévation présente une hauteur maximale qui détermine, en tout ou en partie, une section de passage du verre fondu dans le premier corset ;
- le barrage est monté mobile verticalement pour permettre d'en régler la profondeur d'immersion dans le bain de verre ;
   -- le barrage, seul ou en combinaison avec ladite au moins une élévation, détermine une section du passage du verre fondu susceptible de varier en fonction du réglage de la profondeur dudit barrage ;
- le barrage est amovible, c'est-à-dire démontable, afin notamment d'en permettre le changement en cas d'usure et de faciliter la maintenance du four ;
- le four hybride comporte au moins un moyen de séparation atmosphérique, tel qu'une cloison verticale, qui est apte à séparer l'atmosphère de la zone de fusion électrique à voûte froide et l'atmosphère de la zone d'affinage et d'homogénéisation à voûte chaude ;
- le four hybride comporte des moyens de blocage qui, agencés au niveau de l'extrémité amont du premier corset, sont aptes à retenir la couche de mélange vitrifiable dans la zone de fusion électrique de sorte que ledit mélange vitrifiable présent en surface du bain de verre ne pénètre pas dans le premier corset ;
- les moyens de blocage de la couche de mélange vitrifiable sont formés par le barrage ;
- les moyens de blocage sont formés par les moyens de séparation dont l'extrémité libre s'étend au niveau de la surface du bain, voire est immergée dans le bain de verre ;
- les moyens de blocage sont distincts desdits moyens de séparation, lesdits moyens de blocage étant accolés ou distants des moyens de séparation ;
- le four hybride comporte des moyens de refroidissement du verre qui sont aptes à refroidir le verre dans le premier corset, en particulier au moins un dispositif de refroidissement par circulation d'air ;
   -- le four hybride comporte une zone d'enfournement dans laquelle est agencé un dispositif d'enfournement pour introduire ledit mélange vitrifiable dans la zone de fusion électrique ;
   -- le dispositif d'enfournement est configuré pour déposer le mélange vitrifiable sur l'ensemble de la surface du bain de verre de manière à former une couche isolante entre le bain de verre et la voûte de la zone de fusion ;
- les électrodes sont agencées en surface de manière à plonger dans le mélange vitrifiable, lesdites électrodes plongeantes s'étendant de préférence verticalement ;
- les électrodes sont agencées à travers une sole de la zone de fusion de manière à être immergées dans le mélange vitrifiable, lesdites électrodes montantes s'étendant de préférence verticalement ;
   -- le four hybride comporte des électrodes plongeantes et/ou des électrodes montantes ;
- la zone de fusion électrique comporte avantageusement une zone de faible convection, dite zone tampon, située entre l'extrémité libre des électrodes plongeantes et une sole de la zone de fusion ;
- la zone de fusion est configurée pour présenter une profondeur déterminée de manière à obtenir ladite zone tampon de faible convection, de préférence la profondeur est supérieure à 600 mm, voire préférentiellement supérieure à 800 mm ;
- la première courroie de convection et la deuxième courroie de convection sont séparées par une zone d'inversion des courroies déterminée par un point chaud ou source correspondant au point le plus chaud du verre ;
- la zone d'affinage et d'homogénéisation comporte au moins un brûleur qui est agencé pour obtenir ledit point chaud déterminant ladite zone d'inversion des courroies ;
- le four hybride comporte un muret qui est agencé dans ladite zone d'inversion des courroies ;
   -- le four hybride comporte une variation de la profondeur de la sole par rapport à une surface du verre dans la zone d'affinage et d'homogénéisation, de préférence au moins une élévation, voire une dénivellation, ladite variation de profondeur étant située dans la partie comprenant la première courroie de convection et/ou dans la partie comprenant la deuxième courroie de convection ;
- le four hybride comporte des moyens de modulation tels que du « boosting » électrique et/ou des bouillonneurs qui, agencés dans la zone d'affinage et d'homogénéisation, sont aptes à permettre de moduler la convection desdites courroies afin de faciliter la conduite de la fabrication du verre ;
- le bassin de conditionnement de la zone de refroidissement comprend, d'amont en aval, un corset, dit deuxième corset, puis une braise ;
   -- après le bassin de conditionnement, aucun courant de retour n'a lieu dans le canal d'écoulement destiné à alimenter en verre de haute qualité une zone de formage comportant ladite unité de flottage, dit autrement l'écoulement du verre dans le canal est un écoulement de type « piston » ;
- le four hybride est configuré pour alimenter en verre ladite unité de flottage du verre destinée à fabriquer du verre plat avec une tirée supérieure ou égale à 400 tonnes par jour, préférentiellement comprise entre 600 et 900 tonnes par jour, voire de 1000 tonnes par jour ou plus, ledit verre de haute qualité présentant moins de 0,1 bulle par litre, préférentiellement moins de 0,05 bulle par litre.

L'invention propose encore un ensemble pour la fabrication de verre plat comportant un four hybride de fabrication de verre et une unité de flottage du verre sur un bain de métal fondu qui, agencée en aval, est alimentée en verre par ledit four par l'intermédiaire d'au moins un canal d'écoulement.

### Brève description des figures

D'autres caractéristiques et avantages de l'invention apparaitront au cours de la lecture de la description détaillée qui va suivre pour la compréhension de laquelle on se reportera aux dessins annexés dans lesquels :

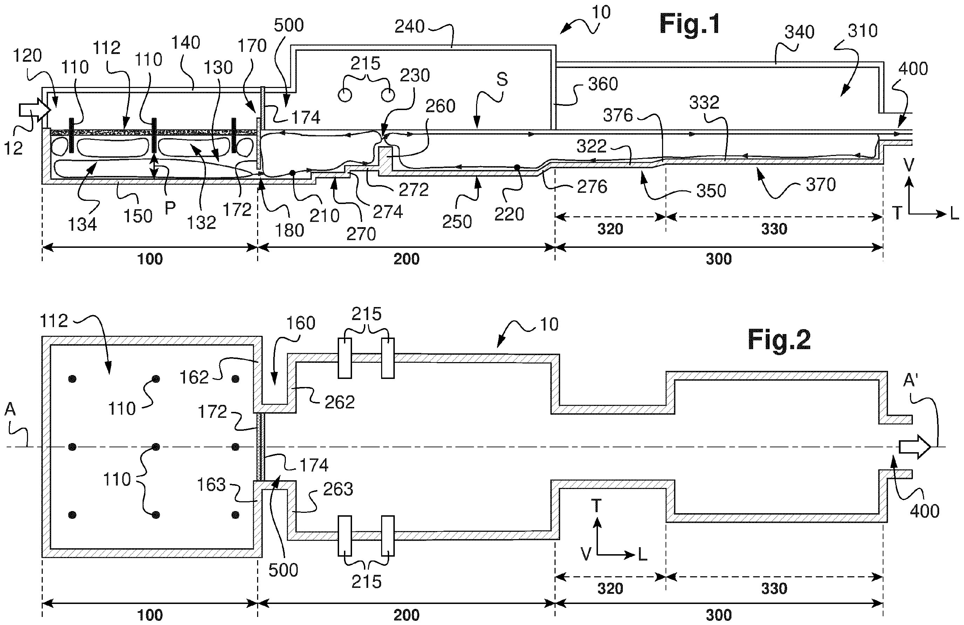

- la figure 1 est une vue de côté qui représente un four hybride pour la fabrication de verre selon un premier mode de réalisation de l'invention comportant une zone de fusion électrique à voûte froide reliée par un premier corset à une zone d'affinage et d'homogénéisation à voûte chaude comportant une première courroie de convection et une deuxième courroie de convection et ensuite une zone de refroidissement parcourue par ladite deuxième courroie de convection et qui illustre en outre un barrage formant un dispositif de séparation, dit « anti-retour », agencé au niveau dudit premier corset ;
- la figure 2 est une vue de dessus qui représente le four selon la figure 1 et qui illustre la zone de fusion électrique reliée à la zone d'affinage et d'homogénéisation par le premier corset dans lequel est agencé le barrage configuré pour empêcher un retour du verre fondu de la zone d'affinage et d'homogénéisation vers la zone de fusion électrique ;

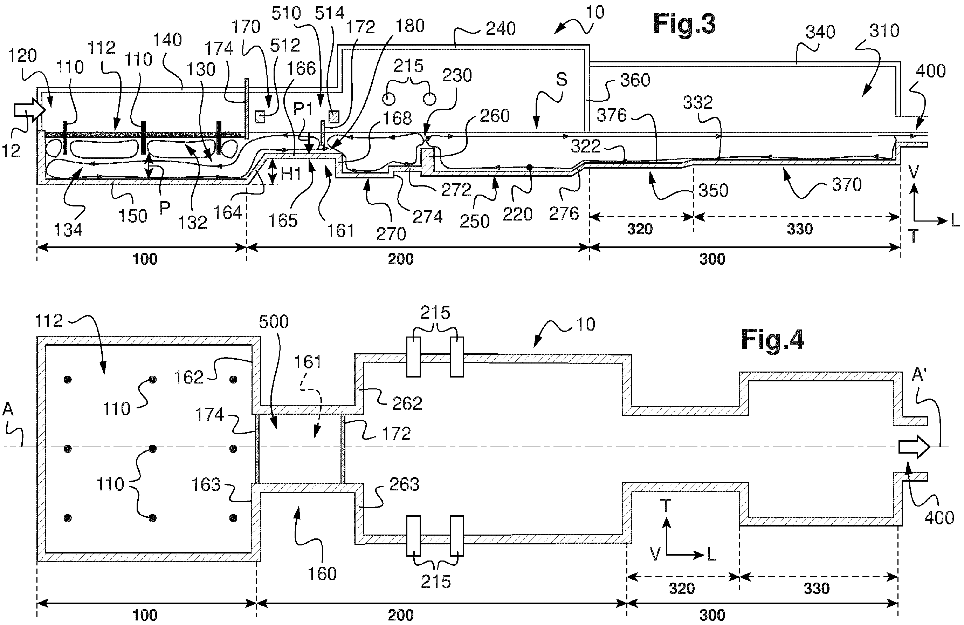

- la figure 3 est une vue de côté qui, analogue à la figure 1, représente un four hybride selon un deuxième mode de réalisation de l'invention dans lequel le dispositif de séparation est formé par un barrage et au moins une élévation de la sole du premier corset et qui illustre le barrage associé à ladite élévation respectivement configurés pour empêcher un retour du verre fondu de la zone d'affinage et d'homogénéisation vers la zone de fusion électrique du four ;
- la figure 4 est une vue de dessus qui, analogue à la figure 2, représente le four hybride selon la figure 3 et qui illustre le barrage préférentiellement mobile associé à l'élévation de la sole dans le premier corset reliant la zone de fusion à la zone d'affinage et d'homogénéisation ;

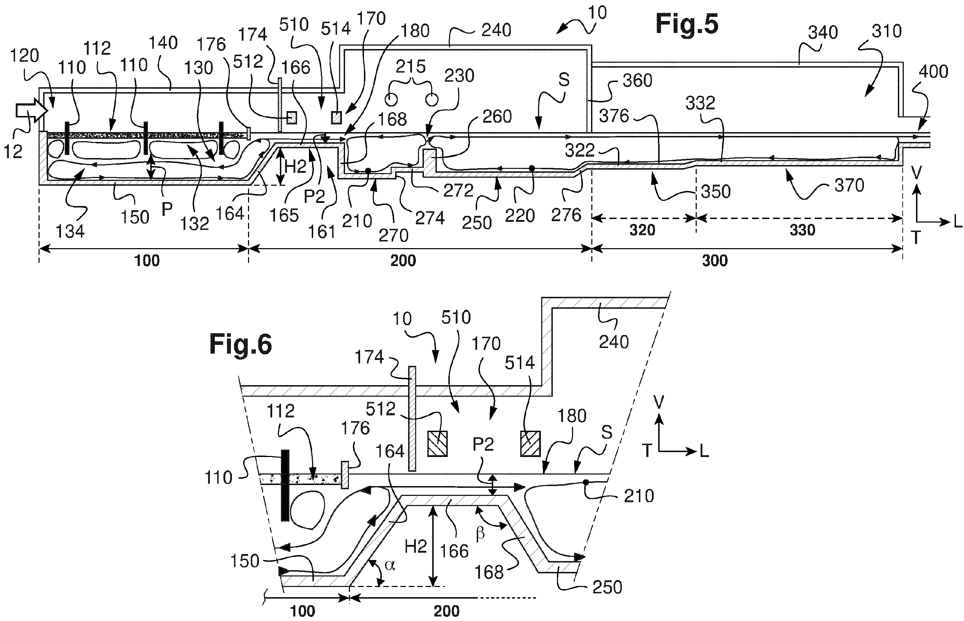

- la figure 5 est une vue de côté qui, analogue aux figures 1 et 3, représente un four hybride selon un troisième mode de réalisation de l'invention dans lequel le dispositif de séparation est uniquement formé par une élévation de la sole du premier corset et qui illustre ainsi une élévation qui, présentant une plus grande hauteur que dans le deuxième mode, est configurée pour empêcher un retour du verre fondu, sans barrage ;
- la figure 6 est une vue de côté qui représente en détail la partie du four hybride selon la figure 5 et qui illustre une variante de réalisation de l'élévation de la sole du premier corset comportant un tronçon descendant, formant un plan incliné, apte à assurer une variation de profondeur progressive du verre fondu vers la zone d'affinage et d'homogénéisation.

### Description détaillée de l'invention

Dans la suite de la description, on adoptera à titre non limitatif les orientations longitudinale, verticale et transversale en référence au trièdre (L, V, T) représenté sur les figures 1 à 6.

On utilisera également par convention les termes « amont » et « aval » en référence à l'orientation longitudinale, ainsi que « supérieur » et « inférieur » ou « haut » et « bas » en référence à l'orientation verticale, et enfin « gauche » et « droite » en référence à l'orientation transversale.

Dans la présente description, les termes « amont » et « aval » correspondent au sens d'écoulement du verre dans le four, le verre s'écoulant de l'amont vers l'aval suivant un axe longitudinal médian A-A' du four hybride (amont en A, aval en A') représenté sur les figures 2 et 4.

Par ailleurs, les termes « courroie » et « boucle » sont ici synonymes, ces termes en lien avec la recirculation du verre dans le four étant bien connus de l'Homme du métier, tout comme le sont respectivement les notions de « voûte froide » et de « voûte chaude » pour un four destiné à la fabrication du verre.

On a représenté sur les figures 1 et 2, respectivement en vues de côté et de dessus (qui ne sont pas à l'échelle), un four hybride 10 pour la fabrication de verre illustrant un premier mode de réalisation de la présente invention.

Tel qu'indiqué précédemment, par analogie avec la troisième conception de four décrite précédemment, le terme « hybride » est ici employé pour qualifier le four selon l'invention en raison de l'utilisation de deux sources d'énergie différentes, respectivement de l'énergie électrique et de l'énergie combustible, lors du processus d'élaboration du verre dans le four.

Toutefois, l'analogie avec la présente invention ne va pas au-delà dès lors, d'une part, que l'énergie électrique (constituant la première source) est l'unique source d'énergie utilisée pour obtenir la fusion du verre et, d'autre part, que l'énergie combustible (constituant la deuxième source), de type fossile ou équivalente, n'est utilisée que pour l'affinage et l'homogénéisation du verre.

Le four hybride 10 selon l'invention est en particulier destiné à alimenter une unité de flottage du verre sur un bain de métal fondu, généralement de l'étain, pour la fabrication de verre plat.

Tel qu'illustré par les figures 1 et 2, le four hybride 10 comporte successivement d'amont en aval, suivant ledit axe longitudinal médian A-A' du four, au moins une zone 100 de fusion électrique, une zone 200 d'affinage et d'homogénéisation et une zone 300 de refroidissement du verre.

Selon une première caractéristique du four hybride 10 selon l'invention, la zone 100 de fusion du four hybride 10 est électrique.

Avantageusement, la zone 100 de fusion électrique est du type à « voûte froide » (aussi appelée « cold top » en anglais).

Avantageusement, l'étape de fusion du verre est obtenue en utilisant uniquement de l'énergie électrique lors de la fabrication du verre et cela par comparaison avec les fours hybrides de l'état de la technique dans lesquels l'étape de fusion est obtenue au moyen d'énergie combustible et, en appoint, d'énergie électrique.

La zone 100 de fusion électrique comporte des électrodes 110 pour fondre un mélange vitrifiable (ou « composition ») qui est constitué des matières premières et du calcin (ou « groisil ») afin d'obtenir un bain 130 de verre.

De manière connue, le calcin (en anglais « cullet ») est constitué de débris de verre qui, obtenus par recyclage du verre, sont broyés et nettoyés avant d'être ensuite ajoutés aux matières premières pour fabriquer à nouveau du verre.

Avantageusement, le calcin favorise la fusion, c'est-à-dire la transformation par fusion du mélange vitrifiable en verre.

De surcroît, le calcin permet de valoriser le verre usagé en le recyclant (le verre étant recyclable à l'infini), les quantités de matières premières nécessaires à la fabrication du verre s'en trouvant dès lors réduites à proportion, ce qui participe à la réduction de l'empreinte carbone du processus d'élaboration.

Le four hybride 10 comporte une zone 120 d'enfournement dans laquelle est agencé un dispositif 12 d'enfournement (encore appelé enfourneuse) qui est destiné à introduire le mélange vitrifiable dans la zone 100 de fusion électrique, ledit dispositif 12 d'enfournement étant illustré schématiquement par une flèche sur la figure 1.

Avantageusement, le dispositif 12 d'enfournement est configuré pour déposer le mélange vitrifiable sur l'ensemble de la surface du bain 130 de verre de manière à former une couche 112 isolante entre le bain 130 de verre et une voûte 140 de la zone 100 de fusion électrique, raison pour laquelle cette dernière est appelée « voûte froide ».

De préférence, le bain 130 de verre est uniformément recouvert d'une couche 112 constituée de mélange vitrifiable, par exemple de 10 à 40 cm d'épaisseur, en dessous de laquelle ont lieu les réactions chimiques complexes qui, décrites en préambule de la demande, conduisent à l'obtention du verre fondu.

Dans la zone 100 de fusion électrique à voûte froide, la puissance dissipée autour des électrodes 110 engendre une zone 132 de fortes convections comportant en particulier des courants ascendants très intenses qui apportent les calories nécessaires à la frontière entre la fonte et le mélange vitrifiable formant ladite couche 112 de mélange vitrifiable.

Dans le processus d'élaboration du verre selon l'état de la technique, outre le dioxyde de carbone (CO₂), la décomposition des matières premières et l'utilisation d'une énergie fossile comme combustible pour l'étape de fusion sont aussi à l'origine d'émissions polluantes constituées essentiellement d'oxyde d'azote (NOx), d'oxyde de soufre (SOx), d'halogènes et de poussières.

Avantageusement, l'absence de combustion (flammes) dans la zone 100 de fusion électrique à voûte froide du four hybride 10 selon l'invention a pour conséquence que le taux de pollution en NOx et SOx est comparativement très faible.

De plus, bien que perméable au dioxyde de carbone (CO₂), la couche 112 de mélange vitrifiable présente sur la surface du bain 130 permet avantageusement de piéger par condensation ou par réactions chimiques les vapeurs, parfois toxiques selon la composition, émises par le verre fondu.

Avantageusement, les électrodes 110 sont agencées en surface de manière à plonger dans le bain 130 de verre, à travers la couche 112 recouvrant la surface du bain 130 tel qu'illustré par la figure 1.

De préférence, les électrodes 110 plongeantes s'étendent verticalement. En variante, les électrodes 110 plongeantes s'étendent obliquement, c'est-à-dire sont inclinées de manière à présenter un angle donné par rapport à l'orientation verticale.

En variante, les électrodes 110 sont agencées à travers une sole 150 de la zone 100 de fusion électrique de manière à être immergées dans le bain 130, les électrodes montantes (par opposition aux électrodes plongeantes) s'étendant de préférence verticalement, en variante obliquement.

Par comparaison à des électrodes agencées à travers la sole 150, les électrodes 110 plongeantes permettent en outre un contrôle plus aisé de leur état d'usure et entraîne une dissipation de l'énergie électrique qui est avantageusement plus proche de l'interface de fusion, de la couche 112 de mélange vitrifiable.

Avantageusement, les électrodes 110 plongeantes permettent par comparaison avec des électrodes montantes de conserver une sole 150 de la zone 100 de fusion électrique qui est exempte de toutes ouvertures.

De préférence, la sole 150 de la zone 100 de fusion électrique est plane telle qu'illustrée par la figure 1.

En variante, la sole 150 comporte au moins une variation de profondeur relativement à la surface du bain 130 de verre, ladite variation comportant au moins une élévation et/ou au moins une dénivellation.

De préférence, les électrodes 110 de fusion sont réparties de manière régulière dans le bain 130. Par ailleurs, le nombre de neuf électrodes 110 représentées ici sur les figures 1 et 2 n'est qu'un exemple illustratif et n'est donc nullement limitatif.

En variante, la zone 100 de fusion électrique pourrait comporter cumulativement des électrodes plongeantes et des électrodes montantes.

Selon une autre variante d'agencement, les électrodes 110 traversent au moins une paroi latérale délimitant ladite zone 100 de fusion électrique, lesdites électrodes 110 s'étendant alors horizontalement et/ou obliquement.

Avantageusement, les électrodes 110 sont en molybdène, ce métal réfractaire supportant des températures de 1700°C étant particulièrement apte à permettre de réaliser une telle fusion du verre en utilisant l'effet Joule, le verre ne devenant conducteur qu'à haute température.

Avantageusement, la zone 100 de fusion électrique comporte une zone de faible convection, dite zone tampon 134, qui est située entre l'extrémité libre des électrodes 110 plongeantes et la sole 150.

La zone 100 de fusion électrique est ainsi configurée pour présenter, en dessous des électrodes 110 plongeantes, une profondeur (P) déterminée de manière à obtenir une telle zone tampon 134 de faible convection.

De préférence, la profondeur (P) entre l'extrémité libre des électrodes 110 plongeantes et la sole 150 est supérieure à 600 mm, préférentiellement supérieure à 800 mm.

Une telle zone tampon 134 de faible convection constitue une autre raison de préférer les électrodes 110 plongeantes par rapport à des électrodes montantes traversant la sole 150.

Avantageusement, la présence d'une zone tampon 134 de faible convection participe directement à l'obtention d'un verre de haute qualité en favorisant un temps de séjour du verre plus long dans la zone 100 de fusion.

Avantageusement, la zone 100 de fusion électrique et la zone 200 d'affinage et d'homogénéisation du verre sont reliées l'une à l'autre par un premier corset 160, c'est à dire une zone de largeur réduite, tel qu'illustré par la figure 2.

Avantageusement, ledit premier corset 160 du four hybride permet d'assurer un refroidissement du verre lorsque le verre s'écoule de la zone 100 de fusion électrique vers la zone 200 d'affinage et d'homogénéisation du verre.

Le refroidissement du verre sera d'autant plus important que le premier corset présentera une grande longueur, le verre issu de la zone 100 de fusion se refroidissant naturellement lors de son écoulement de l'amont vers l'aval à travers le premier corset 160.

Avantageusement, le four hybride 10 comporte des moyens 500 de refroidissement du verre aptes à refroidir sélectivement le verre dans le premier corset 160.

Outre le refroidissement du verre lors de son écoulement à travers le premier corset 160 reliant la zone 100 de fusion à la zone 200 d'affinage, de tels moyens 500 de refroidissement permettent d'accroître encore le refroidissement et surtout de faire varier ce refroidissement grâce à quoi une régulation de la température du verre est alors avantageusement obtenue.

De préférence, les moyens 500 de refroidissement du verre dans le premier corset 160 comportent au moins un dispositif 510 de refroidissement par circulation d'air.

On décrira ci-après un exemple de réalisation de dispositif 510 de refroidissement tel que plus particulièrement représenté schématiquement sur les figures 3 et 4 illustrant un deuxième mode de réalisation et sur les figures 5 et 6 illustrant respectivement un troisième mode de réalisation et une variante, de sorte que l'on se reportera avantageusement auxdites figures.

Un tel dispositif 510 de refroidissement par air du verre comporte par exemple au moins des moyens 512 d'admission pour introduire de l'air de refroidissement dans l'atmosphère dudit premier corset 160 du four hybride 10.

De préférence, le dispositif 510 de refroidissement du verre comporte des moyens 514 d'évacuation agencés dans le premier corset 160 pour évacuer l'air chaud et en assurer le renouvellement par de l'air frais de refroidissement.

En variante, les moyens d'évacuation sont formés par des moyens d'extraction (non représentés) qui, situés en aval du premier corset 160, sont destinés à extraire les fumées. Avantageusement, l'air chaud est alors évacué avec les fumées par lesdits moyens d'extraction sans que le four hybride 10 n'ait à être équipé de moyens supplémentaires.

Les moyens 512 d'admission et les moyens 514 d'évacuation d'air du dispositif 510 de refroidissement du verre sont par exemple formés par une ou des ouvertures débouchant dans les piédroits soutenant la voute du premier corset 160.

Ladite au moins une ouverture d'admission et ladite au moins une ouverture d'évacuation représentées schématiquement sur les figures 3 et suivantes sont par exemple situées longitudinalement à l'opposé les unes des autres, la ou les ouvertures d'admission étant agencées dans la partie amont du premier corset 160 tandis que la ou les ouvertures d'évacuation sont agencées dans la partie aval du premier corset 160.

Les moyens 512 d'admission et les moyens 514 d'évacuation d'air sont par exemple agencés transversalement de part et d'autre du premier corset 160, en variante sur l'un seulement des côtés du premier corset 160.

Avantageusement, la température de l'air de refroidissement introduit dans le premier corset 160 est inférieure à la température de l'air chaud se trouvant à l'intérieur dudit premier corset 160, l'air de refroidissement mis en circulation formant un fluide caloporteur.

De préférence, l'air de refroidissement utilisé est de l'air atmosphérique prélevé à l'extérieur du four hybride 10, voire à l'extérieur de l'enceinte du bâtiment dans lequel est implanté ledit du four hybride 10 alimentant une unité de flottage.

Avantageusement, la température de l'air atmosphérique utilisé est contrôlée afin d'être régulée, l'air peut par exemple être préalablement refroidi ou réchauffé avant son introduction pour en contrôler la température.

Le refroidissement du verre est principalement obtenu par convection, l'air de refroidissement introduit s'échauffant en venant notamment au contact de la surface du verre avant d'être évacué avec la chaleur (les calories) transmise par le verre.

Avantageusement, la circulation de l'air est apte à être contrôlée par l'intermédiaire de moyens de soufflage d'air (non représentés) tels que des ventilateurs qui, associés auxdits moyens d'admission et/ou d'évacuation, sont aptes à être commandés pour faire varier le débit d'air en circulation.

Selon un autre exemple de réalisation, les moyens 500 de refroidissement du verre sont immergés dans le verre s'écoulant de l'amont vers l'aval à travers ledit premier corset 160 afin d'en permettre le refroidissement.

De tels moyens de refroidissement sont par exemple formés par des plots verticaux immergés dans le verre qui sont refroidis par un circuit de refroidissement à fluide caloporteur afin d'évacuer la chaleur transmise aux plots par le verre.

Selon encore un autre exemple de réalisation, les moyens 500 de refroidissement sont aptes à refroidir la structure du premier corset 160 en contact avec le verre, le refroidissement étant réalisé depuis l'extérieur de la structure du premier corset 160.

Bien entendu, les moyens 500 de refroidissement associés au premier corset 160 tels que ceux selon les différents exemples qui viennent d'être décrits sont susceptibles d'être mis en œuvre seul ou encore en combinaison.

Avantageusement, les moyens 500 de refroidissement du verre associés au premier corset 160 permettent de contrôler sélectivement la température du verre laquelle température est susceptible de varier, en particulier lorsque la tirée varie, une augmentation de la tirée provoquant en effet une augmentation de la température du verre.

La figure 2 illustre un exemple de réalisation du premier corset 160 reliant la zone 100 de fusion électrique à la zone 200 d'affinage et d'homogénéisation.

Le passage de la zone 100 de fusion électrique au premier corset 160 se fait par un rétrécissement brusque de la largeur et de la section de passage du verre, par exemple ici par des parois 162 et 163 formant un angle de 90° avec l'axe longitudinal médian A-A' du four.

Le passage du premier corset 160 à la zone 200 d'affinage et d'homogénéisation du verre se fait par un élargissement brusque de la section de passage du verre, par exemple ici par des parois 262 et 263 formant un angle de 90° avec l'axe longitudinal médian A-A' du four.

En variante, l'angle en entrée du premier corset 160 pourrait présenter une valeur qui soit supérieure à 90° de sorte que le rétrécissement de la largeur soit moins brusque, plus progressif, de manière analogue la valeur de l'angle en sortie du premier corset 160 pourrait être choisie pour que l'élargissement soit également moins brusque, plus progressif suivant l'axe longitudinal médian A-A' du four.

Avantageusement, le verre fondu s'écoulant de l'amont vers l'aval par le premier corset 160 est prélevé dans la partie inférieure de la zone 100 de fusion électrique, soit dans le fond, le verre y étant par comparaison plus « froid » que dans la zone 132 de fortes convections située entre les électrodes 110.

Dans ce premier mode de réalisation, le premier corset 160 comporte une sole (non référencée) qui est préférentiellement plane de sorte que ladite sole du premier corset 160 s'étend horizontalement dans le prolongement de la sole 150 plane de la zone 100 de fusion électrique.

Selon l'invention, le four hybride 10 comporte un dispositif 170 de séparation dit « anti-retour » qui, positionné au niveau dudit premier corset 160, est configuré pour empêcher un retour du verre fondu de la zone 200 d'affinage et d'homogénéisation vers la zone 100 de fusion.

Le dispositif 170 de séparation selon le premier mode de réalisation du four hybride 10 illustré par les figures 1 et 2 sera décrit plus en détails ultérieurement.

Selon une deuxième caractéristique du four hybride 10 selon l'invention et par opposition à la zone 100 de fusion électrique à voûte froide, la zone 200 d'affinage et d'homogénéisation du four hybride 10 est du type à « voute chaude ».

La zone 200 d'affinage et d'homogénéisation du four hybride 10 est configurée pour éliminer les bulles (ou défauts gazeux) présentes dans le verre fondu provenant de la zone 100 de fusion électrique afin d'obtenir un verre qui soit de haute qualité et ce faisant notamment apte à alimenter une unité de flottage du verre.

Pour ce faire, la zone 200 d'affinage et d'homogénéisation comporte une première courroie 210 de convection, dite boucle de recirculation amont, et une deuxième courroie 220 de convection, dite boucle de recirculation aval.

De préférence, la première courroie 210 de convection, dite boucle de recirculation amont, est longitudinalement plus courte que la deuxième courroie 220 de convection comme illustré par la figure 1.

Avantageusement, les courants de convection dans le verre correspondant auxdites courroies 210, 220 opèrent un brassage favorisant l'élimination des bulles et augmentant le temps de séjour du verre dans la zone 200 d'affinage et d'homogénéisation ce qui participe à l'obtention d'un verre de haute qualité.

La première courroie 210 de convection et la deuxième courroie 220 de convection sont séparées par une zone 230 d'inversion des courroies 210, 220 qui est déterminée par un point chaud (appelé aussi « point source ») qui correspond au point le plus chaud du verre dans la zone 200 d'affinage et d'homogénéisation, généralement à une température supérieure à 1500°C.

La zone 200 d'affinage et d'homogénéisation comporte au moins un brûleur 215, préférentiellement ici deux brûleurs 215 aériens qui sont agencés sous une voûte 240 pour obtenir ledit point chaud déterminant la zone 230 d'inversion desdites courroies 210, 220.

Dans la zone 200 d'affinage et d'homogénéisation, une partie de l'énergie thermique dégagée par la combustion est transmise directement au verre par rayonnement et convection, une autre partie est transmise par la voûte 240 qui la restitue au verre par rayonnement, et qui notamment pour cette raison est appelée « voûte chaude ».

De préférence, les brûleurs 215 de la zone 200 d'affinage et d'homogénéisation sont des brûleurs transversaux représentés schématiquement sur la figure 2.

Ainsi, le chauffage du verre dans la zone 200 d'affinage et d'homogénéisation est obtenu par les flammes des brûleurs 215 qui se développent par combustion au-dessus de la surface S du verre.

Dans un four hybride 10 selon l'invention, après sa mise en service en vue de la fabrication, l'étape de fusion du verre réalisée dans la zone 100 de fusion est obtenue uniquement avec de l'énergie électrique.

Avantageusement, le chauffage du verre en surface réalisé par combustion d'une énergie fossile ou combustible équivalent dans ladite zone 200 est donc destiné à la seule mise en œuvre de l'étape d'affinage et d'homogénéisation du verre prélevé dans ladite zone 100 de fusion.

Par comparaison notamment avec un four hybride selon la troisième conception décrite précédemment, l'énergie fossile ou combustible équivalente utilisée par les brûleurs 215 pour la combustion ne participe pas à l'étape de fusion de sorte que cette énergie combustible est dans l'invention utilisée en « appoint » par rapport à l'énergie électrique servant en outre à la fusion.

Par conséquent, un four hybride 10 selon l'invention permet de réduire significativement la part de l'énergie combustible par rapport à l'énergie électrique dans le processus d'élaboration du verre, l'énergie électrique devenant l'énergie principale et l'énergie combustible secondaire ou auxiliaire.

Avantageusement, l'électricité représente plus de 60%, voire 80% et même plus, de l'énergie totale utilisée dans le four hybride pour le processus d'élaboration du verre.

Dès lors, on comprendra que la conception du four hybride 10 selon l'invention est particulièrement avantageuse pour réduire l'empreinte carbone lorsque, d'une part, l'énergie combustible est une énergie fossile tel que du gaz et, d'autre part, l'énergie électrique est en tout ou en partie une électricité « verte » obtenue à partir d'énergies renouvelables et décarbonées.

La zone 200 d'affinage et d'homogénéisation peut comporter plus de deux brûleurs 215, en particulier des brûleurs en amont et/ou en aval de ladite zone 230 d'inversion qui, également positionnés au-dessus de la surface S du verre, sont aptes à chauffer ladite surface S du verre afin de parfaire l'affinage et l'homogénéisation du verre par élimination des bulles (ou défauts gazeux) présentes dans le verre fondu.

En effet, en réglant la puissance des brûleurs 215, on peut ajuster la distribution longitudinale des températures et donc la position du point chaud qui est un paramètre important de la conduite du four.

Les brûleurs 215 produisent une flamme par combustion qui peut être obtenue de manière connue en associant différents types de combustible et de comburant mais dont le choix a en outre des conséquences directes dans le bilan carbone de la fabrication du verre, soit les émissions directes et indirectes de gaz à effet de serre qui sont liées à la fabrication du produit, notamment les émissions de dioxyde de carbone (CO₂).

Pour la combustion par les brûleurs 215 de la zone 200 d'affinage et d'homogénéisation, on utilise généralement l'oxygène présent dans l'air comme comburant, lequel air peut être enrichi en oxygène afin d'obtenir un air suroxygéné, voire on utilise quasiment de l'oxygène pur dans le cas particulier d'une oxycombustion.

Généralement, le combustible utilisé est du gaz naturel. Toutefois, pour améliorer notamment encore le bilan carbone, on utilisera avantageusement un biocombustible (en anglais « green-fuels ») en particulier un « biogaz », c'est à dire un gaz composé essentiellement de méthane et de dioxyde de carbone qui est produit par méthanisation soit la fermentation de matières organiques en l'absence d'oxygène, voire préférentiellement du « bio-méthane » (CH₄).

On utilisera encore plus préférentiellement comme combustible de l'hydrogène (H₂) qui, par comparaison à un biogaz, ne comporte avantageusement pas de carbone.

Avantageusement, le four hybride 10 de fabrication de verre selon l'invention peut comporter des régénérateurs en matériaux réfractaires fonctionnant (par exemple par paires et en inversion) ou encore des échangeurs métalliques air/fumée (aussi appelés récupérateurs) qui utilisent respectivement la chaleur contenue dans les fumées issues de la fabrication pour réaliser un préchauffage des gaz et ainsi améliorer la combustion.

Tel qu'indiqué précédemment, le four hybride 10 selon l'invention comporte un dispositif 170 de séparation qui est configuré pour empêcher un retour du verre fondu de la zone 200 d'affinage et d'homogénéisation vers la zone 100 de fusion.

Le dispositif 170 de séparation est positionné au niveau du premier corset 160, c'est-à-dire entre la zone 200 d'affinage et d'homogénéisation et la zone 100 de fusion, pour assurer la fonction « anti-retour » du verre depuis la première courroie 210 de convection du verre.

Dans ce premier mode de réalisation, le dispositif 170 de séparation comporte un barrage 172 qui est destiné à être en partie immergé dans le bain 130 de verre fondu tel qu'illustré par les figures 1 et 2.

Plus précisément, le dispositif 170 de séparation selon le premier mode de réalisation est uniquement constitué par le barrage 172 qui est avantageusement apte à empêcher un retour du verre fondu de la zone 200 d'affinage et d'homogénéisation vers la zone 100 de fusion.

De préférence, le barrage 172 est positionné au niveau de l'extrémité amont du premier corset 160.

Avantageusement, le barrage 172 formant ledit dispositif 170 de séparation permet d'accroître le temps de séjour du verre dans la zone 100 de fusion électrique ce qui participe à l'obtention d'un verre de haute qualité.

De préférence, le barrage 172 s'étend transversalement sur toute la largeur du premier corset 160 tel qu'illustré par la figure 2.

Avantageusement, le barrage 172 est monté mobile verticalement pour permettre d'en régler la profondeur d'immersion dans le bain 130 de verre de sorte que la section 180 du passage du verre fondu située en dessous est susceptible de varier en fonction du réglage de la profondeur du barrage 172.

En variante, le barrage 172 est fixe de sorte que la section 180 du passage du verre fondu est alors constante, c'est à dire déterminée par la profondeur d'immersion dudit barrage 172 dans le bain 130 de verre.

Avantageusement, le barrage 172 agencé en amont du premier corset 160 assure un blocage de la couche 112 de mélange vitrifiable recouvrant le bain 130 de verre dans la zone 100 de fusion électrique à voûte froide par rapport à la zone 200 d'affinage et d'homogénéisation à voûte chaude.

De préférence, la délimitation de la couche 112 de mélange vitrifiable est ainsi assurée par le barrage 172 qui s'étend pour ce faire verticalement au-dessus de la surface du bain 130 de verre tel qu'illustré par la figure 1.

De préférence, le barrage 172 est amovible, c'est à dire démontable, de sorte que ledit barrage 172 est susceptible d'être changé, voire réparé, notamment en raison de l'usure survenant au contact du verre, et ce grâce à quoi la maintenance du four hybride 10 s'en trouve facilitée.

Le barrage 172 est par exemple réalisé en métal ou alliage de métaux non réfractaire, ledit barrage 172 étant alors apte à être refroidi par un circuit de refroidissement (non représenté) à fluide caloporteur, notamment un circuit du type « water jacket » selon les termes anglais usités.

Avantageusement, le barrage 172 participe au refroidissement du verre dans le premier corset 160 en limitant l'écoulement dans le premier corset 160 et grâce au circuit de refroidissement à fluide caloporteur du type « water jacket » qui permet d'évacuer une partie de la chaleur (des calories) transmise par le verre au barrage 172.

En variante, le barrage 172 est réalisé en matériau réfractaire, typiquement en céramique, par exemple un réfractaire électrofondu « AZS » (acronyme pour Alumine-Zircon-Silice) ou encore un métal réfractaire comme le molybdène.

Le four hybride 10 comporte encore au moins un moyen 174 de séparation pour séparer l'atmosphère de la zone 100 de fusion électrique à voûte froide et l'atmosphère de la zone 200 d'affinage et d'homogénéisation à voûte chaude comportant notamment des fumées.

Avantageusement, un tel moyen 174 de séparation permet d'isoler l'atmosphère du premier corset 160 de celui de la zone 100 de fusion, en particulier lorsqu'un dispositif de refroidissement par air est mis en œuvre en tant que moyens de refroidissement du verre dans le premier corset 160.

De préférence, le moyen 174 de séparation est formé par une cloison (ou un rideau) constituant un élément rapporté sur la superstructure du four hybride 10.

On appelle conventionnellement l'ensemble des blocs en contact avec le verre « infrastructure » et « superstructure » l'ensemble des matériaux disposés au-dessus de l'infrastructure.

Le matériau de superstructure, venant au-dessus des blocs de cuve de l'infrastructure et n'étant pas en contact avec le verre mais avec l'atmosphère à l'intérieur du four, est généralement de nature différente de celle des blocs de cuve de l'infrastructure.

Même si le matériau utilisé pour la superstructure est identique à celui de l'infrastructure, par exemple dans le cas d'une voûte chaude, on distingue généralement ces deux parties de la structure d'un four.

En variante, le moyen 174 de séparation est constitué par une partie de la superstructure, par exemple une cloison double en forme de « U » s'ouvrant vers l'extérieur.

Avantageusement, le barrage 172 est alors monté entre les deux ailes du « U » de la cloison, soit dans la portion basse en creux les reliant.

De préférence, le barrage 172 et la cloison 174 atmosphérique sont dans ce premier mode de réalisation des éléments structurellement distincts, indépendants.

De préférence, la cloison 174 n'est pas en contact avec la surface du verre mais en contact avec le barrage 172 pour établir ladite séparation.

Avantageusement, la cloison 174 est par exemple située derrière comme illustré sur la figure 1, soit en aval du barrage.

En variante, la cloison 174 est située devant, soit en amont du barrage 172 ou encore située dans le même plan vertical.

En variante, le barrage 172 et la cloison 174 sont réalisés en une seule pièce assurant alors une double fonction, d'une part la première fonction de séparation du verre entre la zone 100 de fusion et la zone 200 d'affinage et d'homogénéisation et, d'autre part, une fonction de séparation entre l'atmosphère de la zone 100 de fusion à voûte froide 140 et l'atmosphère de la zone 200 d'affinage et d'homogénéisation à voûte chaude 240.

En variante (non représentée), si le barrage 172 n'est pas agencé en amont du premier corset 160 tel qu'illustré par la figure 1, le four hybride 10 comporte alors avantageusement des moyens de blocage, aussi appelés « écrémeur », qui sont aptes à retenir la couche 112 de mélange vitrifiable dans la zone 100 de fusion électrique.

De préférence et à l'instar du barrage 172, les moyens de blocage sont agencés au niveau de l'extrémité amont du premier corset 160 de sorte que ledit mélange vitrifiable présent en surface du bain 130 de verre ne pénètre pas dans le premier corset 160.

Dans le premier mode de réalisation, outre la fonction anti-retour du verre, le barrage 172 assure également la fonction de tels moyens de blocage en retenant avantageusement la couche 112 de mélange vitrifiable dans la zone 100 de fusion électrique.

Un exemple de réalisation de tels moyens de blocage sera décrit plus en détail ultérieurement, sous la référence 176, dans le deuxième mode de réalisation illustré par les figures 3 et 4 et le troisième mode de réalisation illustré par la figure 5.

Dans le premier mode de réalisation illustré par les figures 1 et 2, le four hybride 10 comporte avantageusement un muret 260 qui est agencé dans ladite zone 230 d'inversion des courroies.

De préférence, le muret 260 s'étend verticalement depuis la sole 250 de la zone 200 d'affinage et d'homogénéisation.

Tel qu'illustré par la figure 1, le muret 260 comporte une partie sommitale qui, immergée en dessous de la surface S du verre, détermine le passage du verre de la première courroie 210 de convection, dite boucle de recirculation amont, vers la deuxième courroie 220 de convection, dite boucle de recirculation aval.

De préférence, le four hybride 10 comporte des moyens de modulation (non représentés) tels que du « boosting » électrique et/ou des bouillonneurs qui, agencés dans la zone 200 d'affinage et d'homogénéisation, sont aptes à permettre de moduler la convection desdites courroies 210, 220 afin de faciliter la conduite de la fabrication du verre.

Avantageusement, les moyens de modulation comportent donc selon le terme anglais du « boosting » électrique, c'est-à-dire des moyens de chauffage électrique d'appoint comportant des électrodes et/ou des bouillonneurs, c'est à dire un système d'injection d'au moins un gaz, tel que de l'air ou de l'azote, au niveau de la sole dont les bulles créent alors un mouvement ascensionnel du verre.

De préférence, le four hybride 10 comporte au moins une variation 270 de la profondeur, par rapport à la surface S du verre, d'une sole 250 située dans la zone 200 d'affinage et d'homogénéisation.

La variation 270 de profondeur est située dans la partie comprenant la première courroie 210 de convection et/ou dans la partie comprenant la deuxième courroie 220 de convection.

Avantageusement, la variation 270 de la profondeur de verre est par exemple constituée par au moins une élévation de la sole 250, voire ici plusieurs élévations qui sont illustrées par la figure 1. En variante, la variation 270 de la profondeur est constituée par au moins une dénivellation de la sole 250.

L'élévation de la sole 250 formant la variation 270 de profondeur, soit ici une réduction de la profondeur, est par exemple constituée par au moins une marche 272, voire deux marches.

La variation 270 de profondeur peut s'effectuer plus ou moins progressivement, par exemple par une portion droite 274 dans le cas des deux marches 272 situées en amont du muret 260 ou en variante par une portion inclinée 276 telle qu'illustrée par exemple dans le cas de la marche 322 située en aval du muret 260, à la jonction de la zone 200 d'affinage et d'homogénéisation et de la zone 300 de refroidissement du verre.

De préférence, la zone 300 de refroidissement comporte donc également une variation 370 de profondeur qui est formée par une élévation.

Tel qu'illustré par la figure 1, la variation 370 de profondeur dans la zone 300 de refroidissement comporte par exemple la marche 322, située dans le deuxième corset 320, à laquelle conduit depuis la sole 250 la jonction inclinée 276 et une autre marche 332 qui est située dans la braise 330, en aval de la marche 322.

La marche 322 se raccorde également de manière progressive à l'autre marche 332 par une portion 376 inclinée qui est située à la jonction entre le deuxième corset 320 et la braise 330.

En variante, les portions respectivement droite et inclinée qui viennent d'être décrites en référence à la figure 1 pourraient être inversées entre les marches 272 d'une part et les marches 322, 332 d'autre part, ou encore n'être que d'un seul et même type, c'est-à-dire soit droites, soit inclinées.

Tel qu'illustré par la figure 1 et ainsi qu'il vient d'être décrit avec les marches 322 et 332 successives, la zone 300 de refroidissement comporte une sole 350 qui est configurée de manière que la profondeur par rapport à la surface S de verre diminue progressivement de l'amont vers l'aval, depuis le muret 260.

Selon une troisième caractéristique de l'invention, le four hybride 10 comporte, en aval de la zone 200 d'affinage et d'homogénéisation, ladite zone 300 de refroidissement du verre qui est parcourue par la deuxième courroie 220 de convection, dite boucle de recirculation aval.

La zone 300 de refroidissement est formée par un bassin 310 de conditionnement qui communique avec au moins un canal 400 d'écoulement destiné à alimenter en verre de haute qualité une unité de flottage du verre sur un bain de métal fondu (non représentée) située en aval et formant une zone de formage.

Avantageusement, le bassin 310 de conditionnement de la zone 300 de refroidissement comprend, d'amont en aval, un deuxième corset 320 puis une braise 330.

Avantageusement, l'atmosphère de la zone 200 d'affinage et d'homogénéisation et l'atmosphère plus froide de la zone 300 de refroidissement sont séparées l'une de l'autre par un écran thermique 360 s'étendant verticalement depuis une voûte 340 jusqu'au voisinage de la surface S du verre, préférentiellement sans tremper dans le verre.

Avantageusement, dans tout plan vertical transversal à l'axe longitudinal médian A-A' du four, il existe dans le bassin 310 de conditionnement des points dans le verre ayant une composante de vitesse longitudinale allant de l'aval vers l'amont.

Après le bassin 310 de conditionnement, aucun courant de retour n'a lieu dans le canal 400 d'écoulement destiné à alimenter en verre la zone de formage, dit autrement l'écoulement du verre dans le canal 400 est un écoulement de type « piston ».

Avantageusement, le four hybride 10 selon l'invention est apte à délivrer un verre de haute qualité présentant moins de 0,1 bulle par litre, préférentiellement moins de 0,05 bulle par litre, un tel verre de haute qualité convenant tout particulièrement pour alimenter une unité de flottage du verre sur un bain de métal fondu.

Avantageusement, le four hybride 10 est apte à alimenter une unité de flottage du verre sur un bain de métal fondu avec une tirée supérieure ou égale à 400 tonnes par jour, préférentiellement comprise entre 600 et 900 tonnes par jour, voire de 1000 tonnes par jour ou plus, et cela avec un verre de haute qualité présentant moins de 0,1 bulle par litre.

Avantageusement, un four hybride 10 selon l'invention est apte à délivrer une tirée analogue à celle d'un four à flammes, avec ou sans appoint électrique, grâce à quoi une unité de flottage est susceptible d'être alimentée en verre de haute qualité.

Le four hybride 10 de fabrication de verre selon l'invention alimente par l'intermédiaire du canal 400 d'écoulement une unité de flottage du verre sur un bain de métal fondu, par exemple de l'étain, destinée à la fabrication de verre plat.

Avantageusement, le procédé de fabrication du verre dans un four hybride 10 du type de celui qui vient d'être décrit en référence aux figures 1 et 2 comporte successivement les étapes consistant à :
(a) - fondre un mélange vitrifiable dans une zone de fusion électrique à voûte froide pour obtenir du verre fondu ;
(b) - prélever le verre fondu qui s'écoule à travers un premier corset pourvu d'un dispositif de séparation depuis la zone de fusion vers la zone d'affinage et d'homogénéisation ;
(c) - affiner et homogénéiser ledit verre fondu dans une zone d'affinage et d'homogénéisation à voute chaude comportant une première courroie de convection (dite boucle de recirculation amont) et une deuxième courroie de convection (dite boucle de recirculation aval) ;
(d) - refroidir le verre dans une zone de refroidissement qui, formée par un bassin de conditionnement, est parcourue par la deuxième courroie de convection.

Avantageusement, la température du verre fondu prélevé dans la zone 100 de fusion est abaissée lors du passage à travers le premier corset 160 comportant le dispositif 170 de séparation formé par le barrage 172 et/ou l'élévation 161 de la sole 165.

Avantageusement et selon les modes de réalisation, le procédé comporte une étape (e) de réglage consistant à régler la profondeur du barrage 172 mobile qui, immergé dans le verre, est agencé dans un premier corset 160 reliant la zone 100 de fusion électrique à la zone 200 d'affinage et d'homogénéisation, pour contrôler le débit de verre fondu prélevé dans la zone 100 de fusion.

Avantageusement, l'étape (e) de réglage permet de faire varier la quantité de verre fondu passant de la zone 100 de fusion électrique à la zone 200 d'affinage et d'homogénéisation, par exemple en fonction de la tirée.

Après l'étape (d) de refroidissement dans le bassin 310 de conditionnement, le verre s'écoule dans le canal 400 d'écoulement destiné à alimenter en verre de haute qualité l'unité de flottage du verre.

Avantageusement, le procédé comporte une étape de régulation du refroidissement du verre dans le premier corset 160, notamment en commandant sélectivement les moyens 500 de refroidissement du verre tels qu'au moins un dispositif 510 de refroidissement par air.

Avantageusement, la quantité d'air de refroidissement introduite dans le premier corset 160 par les moyens 512 d'admission du dispositif 510 de refroidissement par air est pilotée en fonction notamment de la température du verre.

On décrira ci-après, par comparaison avec le premier mode de réalisation, un deuxième mode de réalisation d'un four hybride 10 selon l'invention illustré par les figures 3 et 4.

En effet, le four hybride 10 selon ce deuxième mode de réalisation est analogue à celui décrit précédemment en référence aux figures 1 et 2 de sorte que la description qui en a été donnée vaut également pour ce deuxième mode à l'exception de ce qui est détaillé ci-après.

L'une des différences par rapport au premier mode de réalisation est que le premier corset 160 comporte une sole référencée 165, laquelle sole 165 n'est pas plane, ladite sole 165 ne s'étendant pas dans le prolongement de la sole 150 plane de la zone 100 de fusion électrique.

En effet et tel qu'illustré par la figure 3, la sole 165 du premier corset 160 est configurée pour former au moins une élévation 161.

Avantageusement, l'élévation 161 s'étend longitudinalement sur plus de la moitié de la longueur du premier corset 160, voire plus des trois-quarts de ladite longueur.

Dans ce deuxième mode de réalisation, le premier corset 160 du four hybride 10 présente avantageusement une longueur supérieure à celle du premier mode de réalisation, comme on peut par ailleurs le voir en comparant les figures 2 et 4.

Avantageusement, la longueur du premier corset 160 est configurée pour obtenir un refroidissement du verre destiné à s'écouler dans la zone 200 d'affinage et d'homogénéisation dès lors que le verre fondu obtenu par une fusion électrique présente généralement des températures plus élevées, par comparaison notamment à une fusion à flammes.

A titre d'exemple, la température du verre dans la zone de fusion est d'environ 1450°C quand la température souhaitée pour le verre dans la partie aval du premier corset est plutôt de l'ordre de 1300°C à 1350°C.

Selon une caractéristique du deuxième mode de réalisation, ladite au moins une élévation 161 de la sole 165 du premier corset 160 forme une partie dudit dispositif 170 de séparation assurant la fonction d'anti-retour du verre vers la zone 100 de fusion.

Avantageusement, le dispositif 170 de séparation selon ce deuxième mode comporte respectivement un barrage 172 qui, similaire à celui du premier mode, est associé à ladite au moins une élévation 161 de la sole 165 du premier corset 160.

Le barrage 172 n'est toutefois pas positionné en amont du premier corset 160 mais à l'intérieur du premier corset 160 comportant ladite au moins une élévation 161 de la sole 165, longitudinalement entre ses extrémités amont et aval.

De préférence, le dispositif 170 de séparation comporte ici une seule élévation 161 de la sole 165.

Par comparaison avec un muret, ladite élévation 161 est directement formée par la sole 165 et non rapportée sur celle-ci de sorte que l'élévation 161 est constituée par le matériau réfractaire de l'infrastructure formant ladite sole 165 du premier corset 160. De plus, un muret est une structure étroite, de faible épaisseur, qui est soumise à une usure importante ne permettant pas de garantir durablement l'absence de retour du verre dans la zone de fusion.

Tel qu'indiqué précédemment, ladite élévation 161 est large en ce qu'elle s'étend longitudinalement sur la majeure partie de la longueur du premier corset 160, ladite élévation 161 participant avantageusement au refroidissement du verre dans le premier corset 160.

On décrira plus particulièrement ci-après un exemple de réalisation de l'élévation 161 de la sole 165 tel qu'illustré par la figure 3.

Sur la figure 3, l'élévation 161 comporte, successivement de l'amont vers l'aval, au moins un premier tronçon 164 ascendant, un deuxième tronçon 166 sommital et un troisième tronçon 168 descendant.

Avantageusement, l'élévation 161 s'étend transversalement sur toute la largeur du premier corset 160.

Bien entendu, une telle élévation 161 peut présenter de nombreuses variantes géométriques quant à sa forme générale, ses dimensions, notamment selon la configuration de chacun des différents tronçons 164, 166 et 168 la constituant.

De préférence, le tronçon 164 ascendant est incliné d'un angle (a) déterminé de manière à former une rampe apte à provoquer une remontée du verre fondu vers le tronçon 166 sommital de l'élévation 161 tel qu'illustré par la figure 3.

De préférence, le tronçon 164 ascendant est un plan incliné, présentant par exemple un angle (a) aigu compris entre 20° et 70°, ledit angle (a) étant noté (voir sur la figure 6 pour plus de lisibilité) comme l'angle compris entre le tronçon 164 ascendant de l'élévation 161 et l'horizontale en prenant ici comme référence la sole 150 plane de la zone 100 de fusion.

En variante (non représentée), le tronçon 164 ascendant est étagé par exemple réalisé en escalier avec au moins une marche, voire deux marches ou plus dont les dimensions en hauteur et/ou longueur peuvent être ou non identiques.

De préférence, le tronçon 166 sommital est plan, formant un plateau horizontal. Avantageusement, le tronçon 166 sommital s'étend ainsi longitudinalement sur une longueur donnée, de préférence ici supérieure ou égale à la moitié de la longueur totale du premier corset 160.

Le tronçon 166 sommital détermine une hauteur H1 maximale que présente l'élévation 161 et ce faisant détermine également, ici en partie seulement du fait du barrage 172, la section 180 du passage du verre fondu dans le premier corset 160.

De préférence, le tronçon 168 descendant de l'élévation 161 s'étend verticalement, relié par un angle droit à l'extrémité aval du tronçon 166 sommital qui, plan, s'étend horizontalement.

Selon un autre exemple de réalisation, par exemple illustré par la figure 6 qui sera décrite ultérieurement, le tronçon 168 descendant est configuré pour accompagner progressivement l'écoulement du verre fondu du premier corset 160 vers la zone 200 d'affinage et d'homogénéisation.

Un tel tronçon 168 est par exemple formé par un plan incliné, lequel peut être étagé ou non, notamment réalisé en escalier à l'instar de la description donnée précédemment pour les variantes de réalisation du tronçon 164 ascendant.

Outre ladite au moins une élévation 161 qui vient d'être décrite, le dispositif 170 de séparation comporte également dans ce deuxième mode de réalisation au moins un barrage 172 comme dans le premier mode, ledit barrage 172 étant en partie immergé dans le verre fondu.

Le barrage 172 et l'élévation 161 formant en combinaison le dispositif 170 de séparation sont aptes à empêcher un retour du verre fondu de la zone 200 d'affinage et d'homogénéisation vers la zone 100 de fusion électrique, c'est à dire un retour depuis la première courroie 210 de convection du verre.

Avantageusement, le barrage 172 associé à ladite au moins élévation 161 permettent conjointement d'accroître le temps de séjour du verre dans la zone 100 de fusion électrique ce qui participe à l'obtention d'un verre de haute qualité.

Avantageusement, le barrage 172 est susceptible de présenter les mêmes caractéristiques que celles décrites précédemment pour le premier mode de réalisation.

De préférence, le barrage 172 est ainsi amovible, c'est à dire démontable, de sorte que ledit barrage 172 est susceptible d'être changé, voire réparé, notamment en raison de l'usure survenant au contact du verre, et ce grâce à quoi la maintenance du four hybride 10 s'en trouve facilitée.

De la même manière, le barrage 172 est réalisé en métal ou alliage de métaux non réfractaire, ledit barrage 172 étant alors apte à être refroidi par un circuit de refroidissement (non représenté) à fluide caloporteur, notamment un circuit du type « water jacket » selon les termes anglais usités.

En variante, le barrage 172 est réalisé en matériau réfractaire, typiquement en céramique, par exemple un réfractaire électrofondu « AZS » (acronyme pour Alumine-Zircon-Silice) ou encore un métal réfractaire comme le molybdène.

Tel qu'illustré par la figure 3, ledit au moins un barrage 172 est agencé longitudinalement entre les extrémités aval et amont du premier corset 160.

De préférence, le barrage 172 est positionné verticalement au-dessus du tronçon 166 sommital de l'élévation 161.

Le barrage 172 s'étend transversalement sur toute la largeur du premier corset 160 tel qu'illustré par la figure 4.

Avantageusement, le barrage 172 est monté mobile verticalement pour permettre d'en régler la profondeur d'immersion dans le bain 130 de verre de sorte que la section 180 du passage du verre fondu située au-dessus du tronçon 166 sommital de l'élévation 161, est susceptible de varier en fonction du réglage de la profondeur du barrage 172 relativement à la profondeur P1 du verre déterminée par la hauteur H1.

Avantageusement, le four hybride 10 comporte encore au moins un moyen 174 de séparation, tel qu'une cloison, pour séparer l'atmosphère de la zone 100 de fusion électrique et l'atmosphère de la zone 200 d'affinage et d'homogénéisation comportant notamment des fumées.

Tel qu'illustré par les figures 3 et 4, le moyen 174 de séparation est agencé à l'extrémité amont du premier corset 160, adjacente à la zone 100 de fusion électrique.

Dans ce deuxième mode de réalisation, le moyen 174 de séparation, formé ici par une cloison, est en contact avec la surface du verre, voire immergé à son extrémité libre, pour établir non seulement ladite séparation atmosphérique mais également pour retenir la couche 112 de mélange vitrifiable dans la zone 100 de fusion électrique.

Avantageusement, le moyen 174 de séparation assure ainsi une autre fonction à savoir celle de moyens 176 de blocage afin que la couche 112 de mélange vitrifiable présent en surface du bain 130 de verre ne pénètre pas dans le premier corset 160.

Dans ce deuxième mode de réalisation, les moyens 176 de blocage sont donc formés par l'extrémité libre du moyen 174 de séparation constitué par la cloison qui s'étend à cet effet au niveau de la surface du bain 130, voire préférentiellement est immergée dans le bain 130 de verre.

En variante, les moyens 176 de blocage de la couche 112 sont structurellement distincts du moyen 174 de séparation, lesdits moyens 176 de blocage pouvant alors être adjacents ou distants desdits moyens 174 de séparation.

Une telle variante est en outre illustrée par la figure 5 ou 6 représentant un troisième mode de réalisation qui sera décrit plus en détail ultérieurement.

Le moyen 174 de séparation est par exemple situé en aval des moyens 176 de blocage, c'est à dire à distance de ceux-ci. En variante, le moyen 174 de séparation est accolé auxdits moyens 176 de blocage.

Par comparaison avec le premier mode de réalisation, la délimitation de la couche 112 de mélange vitrifiable n'est donc ici pas assurée par le barrage 172 mais soit par l'extrémité libre du moyen 174 de séparation dans ce deuxième mode de réalisation illustré par les figures 3 et 4, soit par des moyens 176 de blocage distincts dans le troisième mode de réalisation illustré par la figure 5 ou 6.

On décrira ci-après, par comparaison avec le deuxième mode de réalisation tout particulièrement, un troisième mode de réalisation qui est illustré par la figure 5 (et par la figure 6 illustrant une variante de réalisation de l'élévation).

Dans ce troisième mode, le dispositif 170 de séparation dit « anti-retour » est uniquement constitué par au moins une élévation 161 de la sole 165 du premier corset 160, par comparaison avec le deuxième mode de réalisation illustré aux figures 3 et 4, voire avec le premier mode de réalisation, de sorte qu'il n'y a donc pas de barrage 172 mobile.

De préférence, le four hybride 10 comporte une élévation 161 de la sole 165 qui présente une hauteur H2, notée sur la figure 5 par rapport à l'horizontale au niveau de la sole 150 plane de la zone 100 de fusion prise comme référence, ladite hauteur H2 étant comparativement supérieure à la hauteur H1 notée sur la figure 3.

Avantageusement, l'élévation 161 de la sole 165 du premier corset 160 est de forme identique à celle décrite précédemment en référence à la figure 3, à savoir constituée successivement d'un tronçon 164 ascendant, d'un tronçon 166 sommital formant un plateau et d'un tronçon 168 descendant.

Tel qu'illustré par la figure 5, la profondeur P2 entre la surface S de verre fondu et le tronçon 166 sommital de l'élévation 161 de la sole 165 est inférieure à la profondeur P1.

Dans ce troisième mode de réalisation, la section 180 de passage du verre fondu n'est ainsi pas déterminée par le barrage 172 avantageusement monté mobile mais est uniquement déterminée par ladite élévation 161 de la sole 165 de sorte que ladite section 180 de passage n'est notamment pas susceptible d'être modifiée.

En l'absence de barrage 172, le four hybride 10 comporte néanmoins au moins un moyen 174 de séparation comme dans le premier mode et le deuxième mode de réalisation, lequel est apte à séparer les atmosphères respectives de la zone 100 de fusion électrique et de la zone 200 d'affinage et d'homogénéisation.

Par ailleurs et tel que décrit précédemment en tant que variante pour le deuxième mode de réalisation, les moyens 176 de blocage sont préférentiellement distincts et séparés dudit moyen 174 de séparation.

En variante et comme dans le deuxième mode de réalisation, les moyens 176 de blocage sont formés par un moyen 174 de séparation dont l'extrémité libre, c'est-à-dire ici inférieure, est de préférence immergée dans le bain 130 de verre.

Selon une variante de réalisation de l'élévation 161 de la sole 165 du premier corset 160 illustrée par la figure 6, le tronçon 168 descendant est configuré pour accompagner progressivement l'écoulement du verre fondu vers la zone 200 d'affinage et d'homogénéisation.

Un tel tronçon 168 est par exemple formé par un plan incliné, lequel peut être étagé ou non, notamment réalisé en escalier.

De préférence, le tronçon 168 est incliné d'un angle (β) déterminé de manière à former une rampe apte à provoquer une descente progressive du verre fondu vers la sole 250 de la zone 200 d'affinage et d'homogénéisation.

Pour le tronçon 168 descendant, l'angle (β) est un angle obtus qui peut par exemple présenter une valeur comprise entre 90° et 145°, ledit angle (β) correspondant à l'angle interne noté à la jonction du tronçon 166 sommital et du tronçon 168 descendant sur la figure 6.

En variante (non représentée), le tronçon 168 n'est pas plan mais étagé par exemple réalisé en escalier avec au moins une marche, voire deux marches ou plus dont les dimensions en hauteur et/ou longueur peuvent être ou non identiques.

Tel qu'illustré par les figures, la profondeur de verre n'est ici pas identique longitudinalement de part et d'autre de ladite au moins élévation 161, respectivement entre la sole 150 plane de la zone 100 de fusion électrique et le début de la sole 250 de la zone 200 d'affinage et d'homogénéisation, en aval du premier corset 160, laquelle zone 200 d'affinage et d'homogénéisation est susceptible de présenter au moins une variation de profondeur.

Comme indiqué précédemment, une telle élévation 161 peut présenter de nombreuses variantes géométriques quant à sa forme générale, ses dimensions, notamment selon la configuration de chacun des différents tronçons 164, 166 et 168 la constituant.

## Revendications

1. Four hybride (10) de fabrication de verre pour alimenter une unité de flottage du verre sur un bain de métal fondu, ledit four hybride (10) comportant d'amont en aval :
- une zone (100) de fusion électrique à voute froide (140) comportant des électrodes (110) pour fondre un mélange vitrifiable afin d'obtenir un bain (130) de verre ;
- une zone (200) d'affinage et d'homogénéisation à voute chaude, comportant une première courroie (210) de convection et une deuxième courroie (220) de convection ; et
- une zone (300) de refroidissement du verre formée par un bassin (310) de conditionnement qui, parcourue par ladite deuxième courroie (220) de convection, est reliée à au moins un canal (400) d'écoulement,
**caractérisé en ce que** le four hybride (10) comporte au moins un corset (160) qui, dit premier corset, comporte une sole (165) et relie la zone (100) de fusion électrique à la zone (200) d'affinage et d'homogénéisation du verre, et **en ce que** ledit four hybride (10) comporte un dispositif (170) de séparation dit « anti-retour » qui, positionné au niveau dudit premier corset (160), est configuré pour empêcher un retour du verre fondu de la zone (200) d'affinage et d'homogénéisation vers la zone (100) de fusion.

2. Four selon la revendication 1, **caractérisé en ce que** le dispositif (170) de séparation comporte un barrage (172) destiné à être en partie immergé dans le bain (130) de verre.

3. Four selon la revendication 1 ou 2, **caractérisé en ce que** le dispositif (170) de séparation comporte au moins une élévation (161) de la sole (165) du premier corset (160).

4. Four selon la revendication 3, **caractérisé en ce que** ladite au moins une élévation (161) de la sole (165) comporte, de l'amont vers l'aval, au moins un tronçon (164) ascendant, un tronçon (166) sommital et un tronçon (168) descendant.

5. Four selon la revendication 4 prise en combinaison avec la revendication 2, **caractérisé en ce que** le barrage (172) est agencé dans le premier corset (160) au-dessus du tronçon (166) sommital de l'élévation (161) de la sole (165).

6. Four selon la revendication 4 ou 5, **caractérisé en ce que** l'un au moins desdits tronçon (164) ascendant et tronçon (168) descendant de ladite au moins une élévation (161) de la sole (165) est incliné par rapport à l'horizontale et/ou comporte un tronçon (166) sommital formant un plateau.

7. Four selon l'une des revendications 3 à 6, **caractérisé en ce que** ladite au moins une élévation (161) présente une hauteur (H1, H2) maximale qui détermine, en tout ou en partie, une section (180) de passage du verre fondu dans le premier corset (160).

8. Four selon l'une quelconque des revendications 2 à 7, **caractérisé en ce que** le barrage (172) est monté mobile verticalement pour permettre d'en régler la profondeur d'immersion dans le bain (130) de verre.

9. Four selon l'une quelconque des revendications 2 à 8, **caractérisé en ce que** le barrage (172) est amovible, c'est-à-dire démontable, afin notamment d'en permettre le changement en cas d'usure et de faciliter la maintenance du four.

10. Four selon l'une quelconque des revendications précédentes, **caractérisé en ce que** le four hybride (10) comporte au moins un moyen (174) de séparation atmosphérique, tel qu'une cloison verticale, qui est apte à séparer l'atmosphère de la zone (100) de fusion électrique à voûte froide et l'atmosphère de la zone (200) d'affinage et d'homogénéisation à voûte chaude.

11. Four selon l'une quelconque des revendications précédentes, **caractérisé en ce que** le four hybride (10) comporte des moyens (176) de blocage qui, agencés au niveau de l'extrémité amont du premier corset (160), sont aptes à retenir la couche (112) de mélange vitrifiable dans la zone (100) de fusion électrique de sorte que ledit mélange vitrifiable présent en surface du bain (130) de verre ne pénètre pas dans le premier corset (160).

12. Four selon la revendication 11 prise en combinaison avec la revendication 2, **caractérisé en ce que** les moyens (176) de blocage de la couche (112) de mélange vitrifiable sont formés par le barrage (172).

13. Four selon la revendication 11 prise en combinaison avec la revendication 10, **caractérisé en ce que** les moyens (176) de blocage sont formés par les moyens (174) de séparation dont l'extrémité libre s'étend au niveau de la surface du bain (130), voire est immergée dans le bain (130) de verre.

14. Four selon la revendication 11 prise en combinaison avec la revendication 10, **caractérisé en ce que** les moyens (176) de blocage sont distincts desdits moyens (174) de séparation, lesdits moyens (176) de blocage étant accolés ou distants des moyens (174) de séparation.

15. Four selon l'une quelconque des revendications précédentes, **caractérisé en ce que** le four hybride (10) comporte des moyens (500) de refroidissement du verre qui sont aptes à refroidir le verre dans le premier corset (160), en particulier au moins un dispositif (510) de refroidissement par circulation d'air.

16. Four selon l'une quelconque des revendications précédentes, **caractérisé en ce que** les électrodes (110) sont agencées en surface de manière à plonger dans le mélange vitrifiable, lesdites électrodes (110) plongeantes s'étendant de préférence verticalement.

17. Four selon l'une quelconque des revendications 1 à 15, **caractérisé en ce que** les électrodes (110) sont agencées à travers une sole (150) de la zone (100) de fusion de manière à être immergées dans le mélange vitrifiable, lesdites électrodes (110) montantes s'étendant de préférence verticalement.

18. Four selon la revendication 16, **caractérisé en ce que** la zone (100) de fusion électrique comporte une zone de faible convection, dite zone tampon (134), située entre l'extrémité libre des électrodes (110) plongeantes et une sole (150) de la zone (100) de fusion.

19. Four selon la revendication 18, **caractérisé en ce que** la zone (100) de fusion est configurée pour présenter une profondeur (P) déterminée de manière à obtenir ladite zone tampon (134) de faible convection, de préférence la profondeur (P) est supérieure à 600 mm, voire préférentiellement supérieure à 800 mm.

20. Four selon l'une quelconque des revendications précédentes, **caractérisé en ce que** la première courroie (210) de convection et la deuxième courroie (220) de convection sont séparées par une zone (230) d'inversion des courroies (210, 220) déterminée par un point chaud ou source correspondant au point le plus chaud du verre et **en ce que** la zone (200) d'affinage et d'homogénéisation comporte au moins un brûleur (215) qui est agencé pour obtenir ledit point chaud déterminant ladite zone (230) d'inversion des courroies.

21. Four selon la revendication 20, **caractérisé en ce que** le four hybride (10) comporte un muret (260) qui est agencé dans ladite zone (230) d'inversion des courroies.

22. Four selon l'une quelconque des revendications précédentes, **caractérisé en ce que** le four hybride (10) comporte des moyens de modulation tels que du « boosting » électrique et/ou des bouillonneurs qui, agencés dans la zone (200) d'affinage et d'homogénéisation, sont aptes à permettre de moduler la convection desdites courroies (210, 220) afin de faciliter la conduite de la fabrication du verre.

23. Four selon l'une quelconque des revendications précédentes, **caractérisé en ce que** le bassin (310) de conditionnement de la zone (300) de refroidissement comprend, d'amont en aval, un deuxième corset (320) puis une braise (330).

24. Four selon l'une quelconque des revendications précédentes, **caractérisé en ce que** le four hybride (10) est configuré pour alimenter en verre ladite unité de flottage du verre avec une tirée supérieure ou égale à 400 tonnes par jour, préférentiellement comprise entre 600 et 900 tonnes par jour, voire de 1000 tonnes par jour ou plus, ledit verre de haute qualité présentant moins de 0,1 bulle par litre, préférentiellement moins de 0,05 bulle par litre.

25. Ensemble pour la fabrication de verre plat comportant un four hybride (10) de fabrication de verre selon l'une quelconque des revendications précédentes et une unité de flottage du verre sur un bain de métal fondu qui, agencée en aval, est alimentée en verre par ledit four (10) par l'intermédiaire dudit au moins un canal (400) d'écoulement.
